# EUROPÄISCHE PATENTANMELDUNG

(11) **EP 4 843 368 A1**
(43) Veröffentlichungstag der Anmeldung: **25.11.2026**
(21) Anmeldenummer: 25177599.5
(22) Anmeldetag: 20.05.2025
(51) Int. Cl.: A01B 59/041, A01B 59/06, A01B 76/00

(54) **VERFAHREN ZUR STEUERUNG DES BETÄTIGUNGSVERHALTENS EINES DREI-PUNKT-KRAFTHEBERS FÜR EINEN LANDWIRTSCHAFTLICHEN TRAKTOR**

(71) Anmelder: Deere & Company, Moline, IL 61265 (US)
(72) Erfinder: SCHREIECK, LUCAS, 68163 Mannheim (DE); JUNG, SEBASTIAN, 68163 Mannheim (DE); SCHMIDT, MARTIN, 68163 Mannheim (DE)
(74) Vertreter: Dehnhardt, Florian Christopher

(57) **Zusammenfassung**

Die Erfindung betrifft ein Verfahren zur Steuerung des Betätigungsverhaltens eines Dreipunkt-Krafthebers (24) für einen landwirtschaftlichen Traktor (10), bei dem der Dreipunkt-Kraftheber (24) hydraulisch verstellbare Unterlenker (34a, 34b) zur Anbringung eines Anbaugeräts (40) umfasst, wobei eine zur hydraulischen Verstellung der Unterlenker (34a, 34b) vorgesehene Betätigungseinrichtung (22) von einer Kontrolleinheit (14) nach Maßgabe einer über eine Nutzerschnittstelle (18, 26) vorgenommenen Bedienereingabe derart angesteuert wird, dass einer beim Anheben bzw. Absenken an den Unterlenkern (34a, 34b) hervorgerufenen Stellbewegung ein hinsichtlich der Flankensteilheit anpassbarer zeitlicher Verlauf aufgeprägt wird.

## Beschreibung

Die Erfindung betrifft ein Verfahren zur Steuerung des Betätigungsverhaltens eines Dreipunkt-Krafthebers für einen landwirtschaftlichen Traktor.

Die Verwendung hydraulischer Dreipunkt-Kraftheber ist bei landwirtschaftlichen Traktoren zum Betrieb unterschiedlichster Anbaugeräte weit verbreitet.

Üblicherweise umfasst der im Heck- oder Frontbereich des landwirtschaftlichen Traktors befindliche Dreipunkt-Kraftheber linke und rechte Unterlenker, die an einem Chassisteil des landwirtschaftlichen Traktors derart angelenkt sind, dass sich ein an zugehörigen Kupplungsschnittstellen der Unterlenker angebrachtes Anbaugerät mittels eines hydraulischen Hubwerks gezielt anheben und absenken lässt. Neben den beiden Unterlenkern ist weiterhin ein zentraler Oberlenker vorgesehen, der der Führung des Anbaugeräts beim Heben und Senken dient und über eine weitere Kupplungsschnittstelle daran eingehängt ist. Hierbei weist das hydraulische Hubwerk linke und rechte Hydraulikzylinder auf, mittels derer sich über eine starre Welle drehfest miteinander verbundene linke und rechte Hubarme verschwenken lassen, an deren freien Enden wiederum die beiden Unterlenker über jeweilige Hubstreben angelenkt sind.

Die Betätigung der Hydraulikzylinder erfolgt auf Veranlassung einer als elektrisch steuerbare Ventilanordnung ausgebildeten Betätigungseinrichtung. Diese weist ein aus einer Hochdruckpumpe mit Hydraulikflüssigkeit gespeistes erstes Sitzventil zur Druckbeaufschlagung zugehöriger Kolbenkammern der Hydraulikzylinder sowie ein zur Druckentlastung der Kolbenkammern vorgesehenes zweites Sitzventil auf, wobei das zweite Sitzventil in ein Hydraulikreservoir mündet. Mit anderen Worten dient das erste Sitzventil dem Anheben, das zweite Sitzventil dem Absenken der Unterlenker des Dreipunkt-Krafthebers. Eine derartige Anordnung ist beispielsweise aus der EP 0 348 854 B1 bekannt.

Die Ansteuerung der Betätigungseinrichtung erfolgt im Falle der bekannten Anordnungen entsprechend eines fest vorgegebenen Positions- und Geschwindigkeitsregelungsalgorithmus. Ungeachtet des am Dreipunkt-Kraftheber jeweils angebrachten Anbaugeräts ist die Bewegungs- bzw. Beschleunigungscharakteristik der Unterlenker beim Heben und Senken eines daran angebrachten Anbaugeräts daher stets mehr oder weniger gleich.

Demgegenüber ist es Aufgabe der vorliegenden Erfindung, ein Verfahren der eingangs genannten Art anzugeben, das eine anwendungsspezifische, mithin flexible Anpassung der Bewegungs- bzw. Beschleunigungscharakteristik der Unterlenker beim Heben und Senken eines daran angebrachten Anbaugeräts ermöglicht.

Diese Aufgabe wird durch ein Verfahren zur Steuerung des Betätigungsverhaltens eines Dreipunkt-Krafthebers für einen landwirtschaftlichen Traktor mit den Merkmalen des Patentanspruchs 1 gelöst.

Bei einem erfindungsgemäßen Verfahren zur Steuerung des Betätigungsverhaltens eines Dreipunkt-Krafthebers für einen landwirtschaftlichen Traktor umfasst der Dreipunkt-Kraftheber hydraulisch verstellbare Unterlenker zur Anbringung eines Anbaugeräts, wobei eine zur hydraulischen Verstellung der Unterlenker vorgesehene Betätigungseinrichtung von einer Kontrolleinheit nach Maßgabe einer über eine Nutzerschnittstelle vorgenommenen Bedienereingabe derart angesteuert wird, dass einer beim Anheben bzw. Absenken an den Unterlenkern hervorgerufenen Stellbewegung ein hinsichtlich der Flankensteilheit anpassbarer zeitlicher Verlauf aufgeprägt wird.

So lässt sich mit zunehmender Flankensteilheit die Progressivität der Bewegungs- bzw. Beschleunigungscharakteristik der Unterlenker gezielt erhöhen, was es ermöglicht, diese anwendungsspezifisch an die Anforderungen bzw. Gegebenheiten unterschiedlicher Anbaugeräte anzupassen. Die Anpassung der Bewegungs- bzw. Beschleunigungscharakteristik ist vorzugsweise jeweils auf die Bewegungsübergänge, mithin die Anlauf- bzw. Auslaufphasen bei Aufnahme bzw. Beendigung der Stellbewegung der Unterlenker begrenzt, dazwischen weist die Stellgeschwindigkeit einen im Wesentlichen konstanten (plateauartigen) Verlauf auf. Typischerweise wird die Stellbewegung der Unterlenker jeweils zwischen einer für das betreffende Anbaugerät vorgesehenen abgesenkten Arbeitsposition und einer angehobenen Transportposition ausgeführt.

So lassen sich bei filigranen Anbaugeräten, wie beispielsweise einem faltbaren Spritzgestänge, einem Düngerstreuer oder einer Reihensämaschine durch Wahl einer weichen Bewegungs- bzw. Beschleunigungscharakteristik mit verringerter Progressivität schleichende Bewegungsübergänge verwirklichen, die es erlauben, die Gerätestruktur vor einem Eintrag übermäßiger Beschleunigungskräfte wie auch unkontrolliert auftretender Schwingungen zu schützen.

Bei anderen Anwendungen hingegen sind reaktionsarme Bewegungsübergänge durch Wahl einer harten Bewegungs- bzw. Beschleunigungscharakteristik mit erhöhter Progressivität erwünscht. Hierzu gehört unter anderem das Anlegen eines Flachsilos mittels eines Schiebeschilds, das sich durch Betätigung eines im Frontbereich des landwirtschaftlichen Traktors vorgesehenen Dreipunkt-Krafthebers in seiner Höhe verstellen lässt, zu dem Zweck, das zu silierende Erntegut durch gezieltes Rangieren des landwirtschaftlichen Traktors gleichmäßig innerhalb des Flachsilos zu verteilen.

In vielen Fällen genügt es, einen Kompromiss zwischen weicher und harter Bewegungs- bzw. Beschleunigungscharakteristik zu finden. Diesem wird durch Bereitstellung einer durchschnittlichen Bewegungs- bzw. Beschleunigungscharakteristik mittlerer Progressivität im Sinne der Verwirklichung eines für viele Anwendungen ausreichenden ausgewogenen Bewegungsübergangs Rechnung getragen.

Vorteilhafte Weiterbildungen des erfindungsgemäßen Verfahrens gehen aus den Unteransprüchen hervor.

Vorzugsweise lässt sich das Betätigungsverhalten des Dreipunkt-Krafthebers beim Anheben und Absenken der Unterlenker zusätzlich vom Bediener anpassen bzw. individualisieren. Insoweit kann von der Kontrolleinheit je nach Anwendung bzw. Anbaugerätetyp
(i) eine beim Anheben bzw. Absenken an den Unterlenkern auftretende Stellbeschleunigung nach Maßgabe einer über die Nutzerschnittstelle vorgenommenen Bedienereingabe auf einen vorgebbaren Maximalwert derart begrenzt werden, dass ein zusätzlicher Schutz des Anbaugeräts vor dem Auftreten übermäßiger Beschleunigungskräfte möglich ist, und/oder
(ii) eine Lage oberer und/oder unterer Stopppunkte beim Verstellen der Unterlenker nach Maßgabe einer über die Nutzerschnittstelle vorgenommenen Bedienereingabe angepasst werden, um eine individuelle Vorgabe der abgesenkten Arbeitsposition bzw. der angehobenen Transportposition der Unterlenker zu ermöglichen.

In letzterem Fall ist es zudem denkbar, dass von der Kontrolleinheit ein beim Erreichen der oberen und/oder unteren Stopppunkte auftretendes Überschwingen nach Maßgabe einer über die Nutzerschnittstelle vorgenommenen Bedienereingabe beeinflusst wird. Die Stellbewegung der Unterlenker erfolgt dann gezielt (impulsartig) über die jeweilige Lage der Stopppunkte hinaus. Beim Absenken der Unterlenker wird so ein Eintauchen bodeneingreifender Bearbeitungswerkzeuge in den Untergrund begünstigt, so zum Beispiel beim Durchdringen einer trockenen bzw. gefrorenen Oberflächenschicht. Beim Anheben der Unterlenker ist hingegen ein Abschütteln von daran anhaftenden Erdrückständen möglich.

Das erfindungsgemäße Verfahren zur Steuerung des Betätigungsverhaltens eines Dreipunkt-Krafthebers für einen landwirtschaftlichen Traktor wird im Folgenden anhand der beigefügten Zeichnungen näher erläutert. Dabei sind hinsichtlich ihrer Funktion übereinstimmende bzw. vergleichbare Komponenten bzw. Baugruppen mit denselben Bezugszeichen gekennzeichnet. Es zeigen:
- Fig. 1: ein schematisch dargestelltes Ausführungsbeispiel des erfindungsgemäßen Verfahrens in Form eines Blockdiagramms,
- Fig. 2: eine beispielhaft dargestellte Anordnung zur Durchführung des erfindungsgemäßen Verfahrens als Bestandteil eines landwirtschaftlichen Traktors mit einem Dreipunkt-Kraftheber, und
- Fig. 3: unterschiedliche Steuerkurven zur Erzeugung einer weichen, durchschnittlichen und harten Bewegungs- bzw. Beschleunigungscharakteristik der Unterlenker des Dreipunkt-Krafthebers.

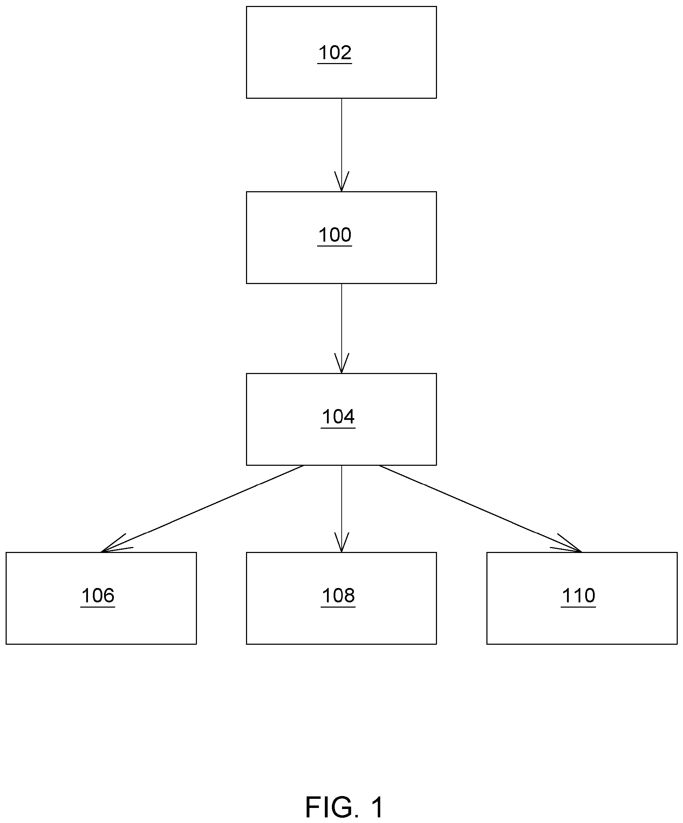

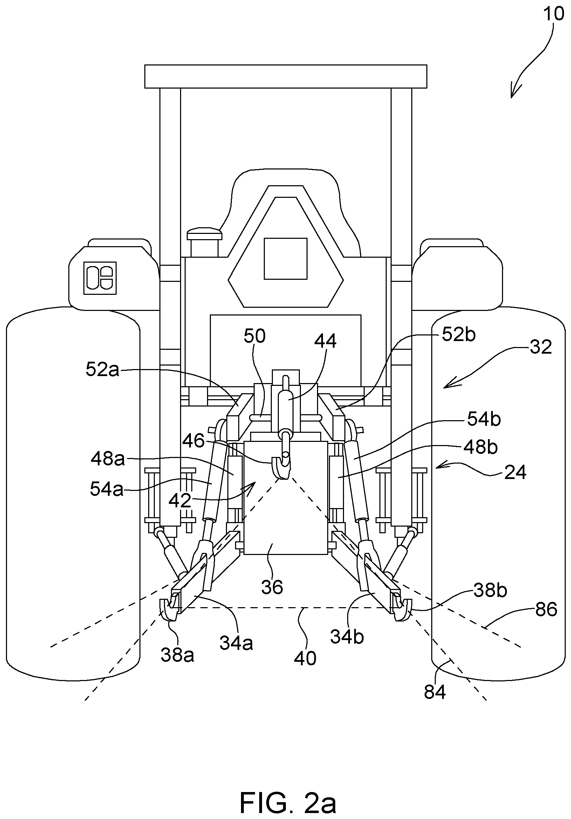

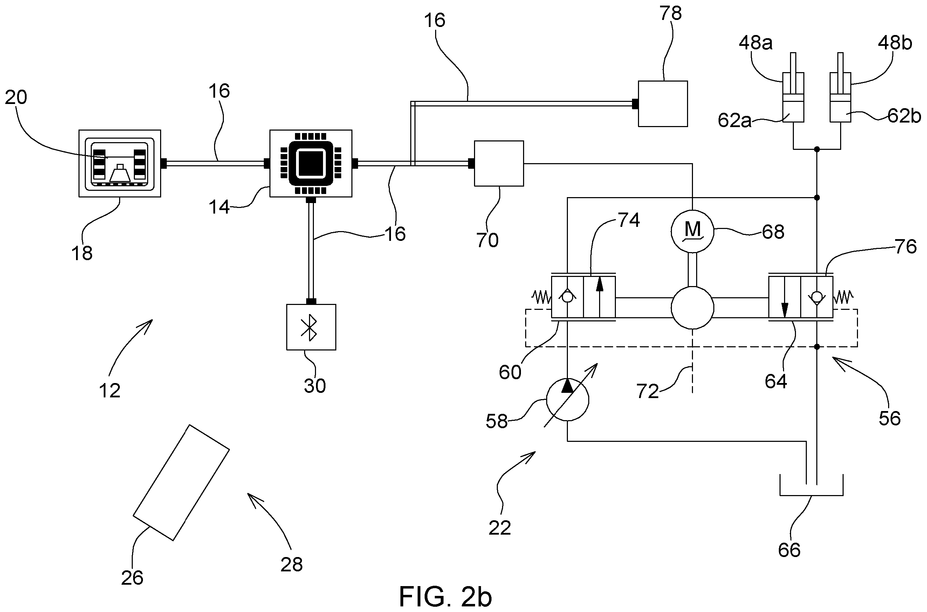

Fig. 1 zeigt ein schematisch dargestelltes Ausführungsbeispiel des erfindungsgemäßen Verfahrens in Form eines Blockdiagramms, wobei zunächst auf die zu dessen Durchführung vorgesehene Anordnung gemäß Fig. 2 eingegangen werden soll.

Die in einem landwirtschaftlichen Traktor 10 untergebrachte Anordnung 12 umfasst neben einer mikroprozessorgesteuerten Kontrolleinheit 14 eine mit dieser über einen CAN-Bus 16 kommunizierende Nutzerschnittstelle 18 in Gestalt eines berührungsempfindlichen Displays 20 sowie eine Betätigungseinrichtung 22 zur elektrohydraulischen Steuerung eines Dreipunkt-Krafthebers 24. Optional ist eine weitere Nutzerschnittstelle 26 vorhanden, die durch ein mobiles Endgerät 28 gebildet ist, das über eine Drahtlosschnittstelle 30 mit der Kontrolleinheit 14 in Verbindung steht.

Der beispielsgemäß im Heckbereich 32 des landwirtschaftlichen Traktors 10 befindliche Dreipunkt-Kraftheber 24 (zusätzlich kann sich ein weiterer Dreipunkt-Kraftheber im Frontbereich des landwirtschaftlichen Traktors 10 befinden) umfasst linke und rechte Unterlenker 34a, 34b, die an einem Differentialgehäuse 36 des landwirtschaftlichen Traktors 10 derart angelenkt sind, dass sich ein an zugehörigen Kupplungsschnittstellen 38a, 38b der Unterlenker 34a, 34b angebrachtes Anbaugerät 40 mittels eines hydraulischen Hubwerks 42 gezielt anheben und absenken lässt. Neben den beiden hydraulisch verstellbaren Unterlenkern 34a, 34b ist weiterhin ein zentraler Oberlenker 44 vorgesehen, der der Führung des Anbaugeräts 40 beim Heben und Senken dient und über eine weitere Kupplungsschnittstelle 46 daran eingehängt ist.

Das hydraulische Hubwerk 42 weist linke und rechte Hydraulikzylinder 48a, 48b auf, mittels derer sich über eine starre Welle 50 drehfest miteinander verbundene linke und rechte Hubarme 52a, 52b verschwenken lassen, an deren freien Enden wiederum die beiden Unterlenker 34a, 34b über jeweilige Hubstreben 54a, 54b angelenkt sind.

Die Betätigung der Hydraulikzylinder 48a, 48b erfolgt auf Veranlassung der als elektrisch steuerbare Ventilanordnung 56 ausgebildeten Betätigungseinrichtung 22. Hierzu weist diese ein aus einer Hochdruckpumpe 58 mit Hydraulikflüssigkeit gespeistes erstes Sitzventil 60 zur Druckbeaufschlagung zugehöriger Kolbenkammern 62a, 62b der Hydraulikzylinder 48a, 48b sowie ein zur Druckentlastung der Kolbenkammern 62a, 62b vorgesehenes zweites Sitzventil 64 auf, wobei das zweite Sitzventil 64 in ein Hydraulikreservoir 66 mündet. Zur elektrischen Steuerung der Ventilanordnung 56 dient ein elektromotorischer Antrieb 68, der auf Veranlassung der Kontrolleinheit 14 über eine Motorsteuerung 70 als Bestandteil der Betätigungseinrichtung 22 ausgehend von einer (in Fig. 2 dargestellten) mittigen Sperrstellung 72 entweder das erste oder das zweite Sitzventil 60, 64 in dessen geöffnete Stellung 74, 76 auszulenken vermag. Mit anderen Worten dient das erste Sitzventil 60 dem Anheben, das zweite Sitzventil 64 dem Absenken der Unterlenker 34a, 34b des Dreipunkt-Krafthebers 24. Mittels eines den Unterlenkern 34a, 34b zugeordneten Positionssensors 78 erfolgt eine Rückmeldung der von den Unterlenkern 34a, 34b ausgeführten Stellbewegung an die Kontrolleinheit 14, um diese kontrolliert zu regeln.

Entsprechend der Darstellung in Fig. 1 wird die Betätigungseinrichtung 22 von der Kontrolleinheit 14 in einem ersten Funktionsblock 100 nach Maßgabe einer über die Nutzerschnittstelle 18 bzw. 26 in einem zweiten Funktionsblock 102 vorgenommenen Bedienereingabe derart angesteuert, dass einer beim Anheben bzw. Absenken an den Unterlenkern 34a, 34b hervorgerufenen Stellbewegung in einem dritten Funktionsblock 104 ein hinsichtlich der Flankensteilheit (mithin seines Anstiegs- und Abfallverhaltens) anpassbarer zeitlicher Verlauf aufgeprägt wird.

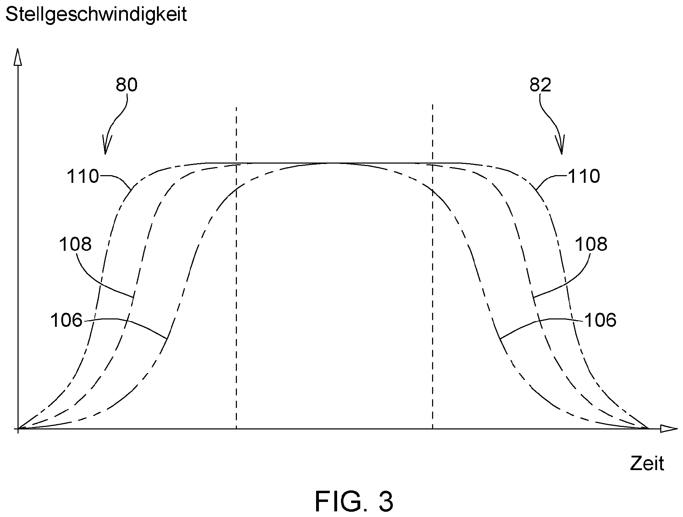

So lässt sich mit zunehmender Flankensteilheit die Progressivität bzw. Bissigkeit der Bewegungs- bzw. Beschleunigungscharakteristik der Unterlenker gezielt erhöhen. Dies ist in Form entsprechender Steuerkurven 106, 108, 110 in Fig. 3 wiedergegeben und entspricht einer über die Nutzerschnittstelle 18 bzw. 26 dreistufig auswählbaren weichen, ausgewogenen oder harten Bewegungs- bzw. Beschleunigungscharakteristik der Unterlenker 34a, 34b. Auf diese Weise ist es möglich, die Bewegungs- bzw. Beschleunigungscharakteristik der Unterlenker 34a, 34b anwendungsspezifisch an die Anforderungen bzw. Gegebenheiten unterschiedlicher Anbaugeräte 40 anzupassen. Aufgetragen ist hier jeweils der Verlauf des Betrags der Stellgeschwindigkeit der Unterlenker 34a, 34b über die Zeit.

Wie zu erkennen ist, ist die Anpassung der Bewegungs- bzw. Beschleunigungscharakteristik jeweils auf die Bewegungsübergänge, mithin die Anlauf- bzw. Auslaufphasen 80, 82 bei Aufnahme bzw. Beendigung der Stellbewegung der Unterlenker 34a, 34b begrenzt, dazwischen weist die Stellgeschwindigkeit einen im Wesentlichen konstanten (plateauartigen) Verlauf auf. Hierbei wird die Stellbewegung der Unterlenker 34a, 34b jeweils zwischen einer für das betreffende Anbaugerät 40 vorgesehenen abgesenkten Arbeitsposition 84 und einer angehobenen Transportposition 86 ausgeführt (siehe Fig. 2).

So lassen sich bei filigranen Anbaugeräten 40, wie beispielsweise einem faltbaren Spritzgestänge, einem Düngerstreuer oder einer Reihensämaschine durch Wahl einer weichen Bewegungs- bzw. Beschleunigungscharakteristik mit verringerter Progressivität schleichende Bewegungsübergänge verwirklichen, die es erlauben, die Gerätestruktur vor einem Eintrag übermäßiger Beschleunigungskräfte wie auch unkontrolliert auftretender Schwingungen zu schützen.

Bei anderen Anwendungen hingegen sind reaktionsarme Bewegungsübergänge durch Wahl einer harten Bewegungs- bzw. Beschleunigungscharakteristik mit erhöhter Progressivität erwünscht. Hierzu gehört unter anderem das Anlegen eines Flachsilos mittels eines Schiebeschilds, das sich durch Betätigung eines im Frontbereich des landwirtschaftlichen Traktors 10 vorgesehenen Dreipunkt-Krafthebers in seiner Höhe verstellen lässt, zu dem Zweck, das zu silierende Erntegut durch gezieltes Rangieren des landwirtschaftlichen Traktors 10 gleichmäßig innerhalb des Flachsilos zu verteilen.

In vielen Fällen genügt es, einen Kompromiss zwischen weicher und harter Bewegungs- bzw. Beschleunigungscharakteristik zu finden. Diesem wird durch Bereitstellung einer durchschnittlichen Bewegungs- bzw. Beschleunigungscharakteristik mittlerer Progressivität im Sinne der Verwirklichung eines für viele Anwendungen ausreichenden ausgewogenen Bewegungsübergangs Rechnung getragen.

Das Betätigungsverhalten des Dreipunkt-Krafthebers 24 beim Anheben und Absenken der Unterlenker 34a, 34b lässt sich zusätzlich vom Bediener anpassen bzw. individualisieren. Insoweit ist vorgesehen, dass von der Kontrolleinheit 14 je nach Anwendung bzw. Anbaugerätetyp
(i) im dritten Funktionsblock 104 eine beim Anheben bzw. Absenken an den Unterlenkern 34a, 34b auftretende Stellbeschleunigung nach Maßgabe einer über die Nutzerschnittstelle 18 bzw. 26 im zweiten Funktionsblock 102 vorgenommenen Bedienereingabe auf einen vorgebbaren Maximalwert derart begrenzt wird, dass ein zusätzlicher Schutz des Anbaugeräts 40 vor dem Auftreten übermäßiger Beschleunigungskräfte möglich ist, und/oder
(ii) im dritten Funktionsblock 104 eine Lage oberer und/oder unterer Stopppunkte beim Verstellen der Unterlenker 34a, 34b nach Maßgabe einer über die Nutzerschnittstelle 18 bzw. 26 im zweiten Funktionsblock 102 vorgenommenen Bedienereingabe angepasst wird, um eine individuelle Vorgabe der abgesenkten Arbeitsposition 84 bzw. der angehobenen Transportposition 86 der Unterlenker 34a, 34b zu ermöglichen.

Im zweiten Funktionsblock 102 ist zudem vorgesehen, dass von der Kontrolleinheit 14 ein an den Unterlenkern 34a, 34b beim Erreichen der oberen und/oder unteren Stopppunkte auftretendes Überschwingen nach Maßgabe einer über die Nutzerschnittstelle 18 bzw. 26 im zweiten Funktionsblock 102 vorgenommenen Bedienereingabe beeinflusst wird. Die Stellbewegung der Unterlenker 34a, 34b erfolgt dann gezielt (impulsartig) über die jeweilige Lage der Stopppunkte hinaus. Beim Absenken der Unterlenker 34a, 34b wird so ein Eintauchen bodeneingreifender Bearbeitungswerkzeuge in den Untergrund begünstigt, so zum Beispiel beim Durchdringen einer trockenen bzw. gefrorenen Oberflächenschicht. Beim Anheben der Unterlenker 34a, 34b ist hingegen ein Abschütteln von daran anhaftenden Erdrückständen möglich.

## Patentansprüche

1. Verfahren zur Steuerung des Betätigungsverhaltens eines Dreipunkt-Krafthebers für einen landwirtschaftlichen Traktor, umfassend hydraulisch verstellbare Unterlenker (34a, 34b) zur Anbringung eines Anbaugeräts (40), wobei eine zur hydraulischen Verstellung der Unterlenker (34a, 34b) vorgesehene Betätigungseinrichtung (22) von einer Kontrolleinheit (14) nach Maßgabe einer über eine Nutzerschnittstelle (18, 26) vorgenommenen Bedienereingabe derart angesteuert wird, dass einer beim Anheben bzw. Absenken an den Unterlenkern (34a, 34b) hervorgerufenen Stellbewegung ein hinsichtlich der Flankensteilheit anpassbarer zeitlicher Verlauf (106, 108, 110) aufgeprägt wird.

2. Verfahren nach Anspruch 1, **dadurch gekennzeichnet, dass** von der Kontrolleinheit (14) eine beim Anheben bzw. Absenken an den Unterlenkern (34a, 34b) auftretende Stellbeschleunigung nach Maßgabe einer über die Nutzerschnittstelle (18, 26) vorgenommenen Bedienereingabe auf einen vorgebbaren Maximalwert begrenzt wird.

3. Verfahren nach Anspruch 1 oder 2, **dadurch gekennzeichnet, dass** von der Kontrolleinheit (14) eine Lage oberer und/oder unterer Stopppunkte beim Verstellen der Unterlenker (34a, 34b) nach Maßgabe einer über die Nutzerschnittstelle (18, 26) vorgenommenen Bedienereingabe angepasst wird.

4. Verfahren nach Anspruch 3, **dadurch gekennzeichnet, dass** von der Kontrolleinheit (14) ein beim Erreichen der oberen und/oder unteren Stopppunkte auftretendes Überschwingen nach Maßgabe einer über die Nutzerschnittstelle (18, 26) vorgenommenen Bedienereingabe beeinflusst wird.
